# EUROPEAN PATENT SPECIFICATION

(11) **EP 4 536 873 B1**
(45) Date of publication and mention of the grant of the patent: **28.10.2026**
(21) Application number: 23729435.0
(22) Date of filing: 06.06.2023
(51) Int. Cl.: C25B 1/04, C25B 9/05, C25B 9/63, C25B 9/73

(54) **FRAMING STRUCTURE FOR AN ELECTROLYSER**
RAHMENSTRUKTUR FÜR EINEN ELEKTROLYSEUR
STRUCTURE D'ENCADREMENT POUR ÉLECTROLYSEUR

(30) Priority: 07.06.2022 IT 202200011972
(43) Date of publication of application: 16.04.2025
(73) Proprietor: Viering, Jentschura & Partner mbB, 81675 Munich (DE)
(72) Inventor: NUZZO, Daniele, 20134 Milan (IT); PEREGO, Michele, 20134 Milan (IT); LIUZZO, Mirko, 20134 Milan (DE)
(74) Representative: Viering, Jentschura & Partner mbB Patent- und Rechtsanwälte
(86) International application number: PCT/EP2023/065082
(87) International publication number: WO 2023/237535

(56) References cited:
- US-A1- 2014 069 807
- US-A1- 2014 305 794

## Description

### FIELD OF THE INVENTION

The present invention relates to the field of framing structures for electrolysers.

### BACKGROUND OF THE INVENTION

Depending on their industrial application, electrolysers may be operated at varying pressures and are therefore required to withstand the consequent mechanical stress exerted on the individual components as well as the overall structure. Pressure conditions may be dictated by chemistry, components, dimensions, and industry served. Examples of high-pressure electrolysers may be found, for example, in the field of proton exchange membrane (PEM) electrolysis and alkaline water electrolysis (AWE), where operating pressures may exceed 5 bars.

In the past, cell frames of high-pressure electrolysers in AWE applications, for instance, have been entirely made of carbon steel or stainless steel, which provided good mechanical resistance. However, due to the corrosion rate of these metals when immersed into strong alkaline solutions, they were also negatively impacting on the overall performance of the electrolyser and affecting its working life. The corrosion of carbon or stainless steels adversely affects the electrolyte purity and causes sludge formation, which in turn may obstruct the electrolyte flow and cause pressure losses as well as safety concerns.

Conversely, in modern high-pressure AWE electrolysers, the cell frame is made of high-grade engineering plastic such as PSU (polysulfone), PPS(Polyphenylene sulfide) or PEEK (polyether ether ketone), optionally reinforced with glass fiber. These materials are almost chemically inert to the electrolyte but their mechanical properties do not match those of steel. Their Young's modulus, for instance, is 15 to 100 times lower than steel at room temperature.

Engineering plastics can be used to manufacture cell frames of small, pressurized electrolysers, where mechanical stresses and deformation are limited due to the cell frame dimensions. However, in larger and/or high-pressure electrolysers, cell frames made of these materials require a considerable thickness to withstand mechanical stress and keeping mechanical deformations in an acceptable range. This approach is disadvantageous since it considerably increases the costs, dimensions, and weight of the electrolyser.

Purpose of the present invention is to provide a framing structure for electrolysers subject to internal pressure, regardless of their dimensions and of the industry served, able to combine the chemical resistance to corrosive environments of engineering plastics with the robust mechanical properties of steel, while limiting the cell frame costs, the dimensions of its components and their weight.

Additional purpose of the present invention is to provide an electrochemical cell and an electrolyser equipped with the framing structure according to the invention, in particular for use in high-pressure water electrolysis applications. Prior art US2014069807 discloses framing structures made of more than two containment structures

### DETAILED DESCRIPTION OF THE INVENTION

Under a first aspect, the present invention relates to a framing structure, optionally stackable, and suitable to be used in an electrolyser.

The framing structure according to the invention comprises:
(i) at least a first and a second containment structure, and
(ii) at least a first and a second support structure.

Each support structure typically has two major opposite surfaces and an outer border of overall thickness Tₛ.

The term "outer border" indicates the area connecting the two major opposite surfaces of the support structure and may be flat, rounded, concave or convex, and/or provided with ridges, nooks, slopes or indentations.

The first and a second support structures are placed facing each other, even if other elements may be interposed between them, so that their major opposite surfaces are essentially parallel to each other.

Typically, the major opposite surfaces of the support structures are substantially flat or exhibit slight concave or convex profiles. The specific shapes, however, shall be chosen by the skilled person according to practice. Analogously, the overall geometry of the support structures may vary, both in size and shape. Typically, they either exhibit a circular/oval section or a polygonal shape, though any shape may in principle be used.

The support structures are provided with a housing suitable to accommodate any elements that may be lodged within an electrolytic cell, either alone or in combination, such as: electrodes, separators, elastic elements, bipolar plates and/or current collectors. The housing is situated on at least one of the two major opposite surfaces of each support structure. The housing may be an empty space with appropriate contouring around its edges to suitably hold the electrode and/or the other elements. The housing may be a through hole to expose the electrode surface, and foster the electrochemical reaction, on both sides.

Preferably, the support structures are made of an electrochemically inert material, such as plastic, to avoid the formation of sludge. The choice of material will also depend on the application. In corrosive environments, such as those of alkaline water electrolysis, the support structures according to the invention can be advantageously made of high-grade engineering plastics, preferably polysulfone, polyphenylene sulfide or polyether ether ketone, and optionally reinforced with glass fibers.

In less demanding electrochemical applications, supporting structures in polypropylene or other less expensive plastics may be satisfactorily used.

The first and second containment structures are respectively positioned around the outer border of the first and second support structures, wrapping the exposed surface of said border completely or in part.

It is noted that, during the operation of a pressurized electrolyser, the support structures are subject to a hydrostatic pressure equal to the stack operating pressure, which will deform radially towards the containment structures. Because of their mutual positioning, upon direct or indirect contact of the internal support structure with the corresponding containment structure(s), most of the mechanical stress will be transferred to the latter. Therefore, the containment structure(s) may be chosen of a more mechanically robust material than the support structures and suffer less or negligible deformation.

Indeed, unlike the support structures (which are in contact with the electrolyte and shall, as discussed, be advantageously chosen of a compatible, corrosion resistant material), the containment structures are preferably not in contact with the electrolyte and serve as mechanical reinforcement of the support structure under pressure. In order to further reduce possible deformations of the internal support structure, and to keep the containment structures removed from the electrolyte, the latter may be advantageously shaped to minimize, and preferably avoid, any overlap with either of the two major opposite surfaces of each support structure.

According to the present invention, each containment structure is not a continuous unit, but is composed by at least two separate segments, and each segment is provided with at least two engageable elements.

The engageable elements are means to allow connecting, securing and/or pressing the two containment structures together, fixing them in place. For instance, the engageable elements may be through holes, contactable via tie-rods, screws, bolts or rivets. They may, less preferably, be fashioned into female/male shapes or other interlocking shapes (or any other mechanisms, mechanical or otherwise) suitable to be create a mutual and reliable connection with each other.

The segments within each containment structure are preferably placed substantially adjacent and consecutive to each other along the border of the support structure.

Each containment structure may be composed of any number of segments equal or greater than two, but a number between 2-8 segments for each containment structure is preferable for practical reasons.

Since each containment structure is composed of a plurality of distinct segments not necessarily connected with each other, to ensure mechanical stability of the framing structure the segments of the first and second containment structures are mutually oriented in such a way that at least two engageable elements present in one same segment of the first containment structure face two engageable elements present into two separate segments of the second containment structure.

This ensures that once the engageable means of the first containment structure are connected with the opposite ones of the second containment structure, the two containment structures acquire a rigid and mechanically stable set up.

The segmented design of the external containment structure allows to dramatically reduce the amount of manufacturing scraps, and to make these structures easier to transport and less cumbersome to manage/mount.

According to one embodiment, the containment structure overlaps with the outer border of the support structure for a width (i.e. along the z axis in the figures) which is at least 50% of the outer border thickness Tₛ, preferably at least 70%. The higher the pressure within the electrolyser and/or the higher its size, the higher should be the border percentage covered by the containment structure.

The partial or complete adherence of the containment structures with the support structure has the effect of counteracting the radial pressure force that is generated within the cell during the electrolytic reaction. Indeed, during operation of an enclosed electrochemical cell, the gas evolution reaction increases the pressure within the cell enclosure and thus inside the cell. Typically, terminal flanges are used to counteract the pressure force acting perpendicularly to the electrode surface. The framing structure according to the invention effectively addresses the radial pressure that is directed outwardly in the electrode plane.

According to another embodiment, the containment structure overlaps with the outer border of the support structure for a width which is less than 100% of the border thickness Tₛ, thus avoiding a complete coverage of the border and a possible direct contact between adjacent containment structures. This may prevent the containment structures from discharging the tightening force on each other, as they may be made of materials that are unsuitable to this effect. Suitable spacers may be inserted between them. Additionally, leaving some space between adjacent containment structures allows room for inserting useful devices for monitoring cell voltage parameters.

According to another embodiment, when the number of support structures is greater than two, at least one containment structure may be situated around the outer border of at least two adjacent support structures at once. This allows to reduce the number of pieces required for the assembly of an electrolyser and facilitates its installation.

In the framing structure according to the invention, at least two support structures may be placed adjacent to one another other and may be optionally separated by gaskets. The gaskets may be housed within suitable grooves situated on the major surfaces of the support structure. In other embodiments the gaskets may be placed externally to the surface area of the support structure and sandwiched between two adjacent support structures.

In the framing structure according to the invention, the first and second containment structures may be mutually separated by spacers, optionally made of rubber. This helps maintaining the correct mutual position of the elements. It also ensures that the pressure from the electrolyser tightening system is mainly transferred to the support structures and their gasketing systems.

According to another embodiment, the outer border of each support structure has a protruding ridge along at least one of its perimetral edges to facilitate the accommodation of the respective containment structure within the resulting nook.

The containment structures according to the invention are preferably made of a material having a greater mechanical resistance of the internal support structures, such as metal, for example. Even more preferably they are made of steel, particularly carbon steel or stainless steel. Alternatively, they may also be made of a composite material. For instance they can be made of carbon fibers, or constituted of a metal core covered by a plastic outer surface which prevents corrosion.

All the above-mentioned materials impart enough robustness to the external containment structures to effectively counteract the radial forces that the pressurized electrolyser is subject to.

The skilled person easily recognizes that the framing structure according to the above embodiments may exhibit a greatly reduced overall dimension compared to cell frames entirely made of engineering plastic of the prior art, thanks to the mechanical properties of the external containment structure. This also results in an overall lesser quantity of expensive engineering plastic employed, with a positive impact on costs.

Under a further embodiment, in the framing structure according to the invention, the support structures are of substantially circular shape having a maximum external diameter D_{F}, and the containment structures have an annular shape divided into a plurality of arc-shaped segments. Each annular-shaped containment structure has an internal and external diameter Dᵢ and Dₑ, where Dᵢ< D_{F}< Dₑ or D_{F} < Dᵢ< Dₑ. Depending on whether the support structure has a protruding ridge or not, the former or the latter condition respectively apply.

Under a second aspect, the invention relates to an electrochemical cell comprising the framing structure hereinbefore described, where the at least first support structure houses an anode, the at least second support structure houses a cathode, said anode and said cathode being placed facing each other and being optionally separated by a separator element such as a diaphragm or a membrane.

Under a third aspect, the invention relates to an electrolyser comprising a plurality of electrochemical cells wherein each cell is equipped with the framing structure hereinbefore described and the containment structures are mutually connected via tie rods engaging with the at least two engageable elements of each segment, which are preferably through holes.

In a further embodiment of the electrolyser according to the invention, each framing structure may advantageously comprise two internal support structures placed between the first and second containment structure, and additional two support structures are placed externally with respect to the peripheral containment structures and are closed by two opposite terminal flanges.

It is preferable that the latter are not placed in direct contact with the containment structures, to avoid discharging the pressure force along the electrolyser axial direction (i.e. the direction perpendicular to the electrodes) directly on the more rigid elements of the stack.

Under a fourth aspect, the invention relates to the use of the above electrolyser for high pressure (>5 bar) water electrolysis, preferably alkaline water electrolysis.

A number of embodiments of the invention are described by way of example below with reference to the appended drawings, the purpose of which is solely to illustrate the mutual arrangement of the various elements relating to said embodiments of the invention. The drawings are not to scale. Identical numbers are used to indicate features having the same purpose/effect. The coordinate axis x, y, z, are used in the same fashion throughout all figures. The xy plane is substantially parallel to the two major surfaces of the internal support structures, whereas z is perpendicular to such plane and identifies the main longitudinal axis of the electrolyser according to the invention.

### DESCRIPTION OF THE DRAWINGS

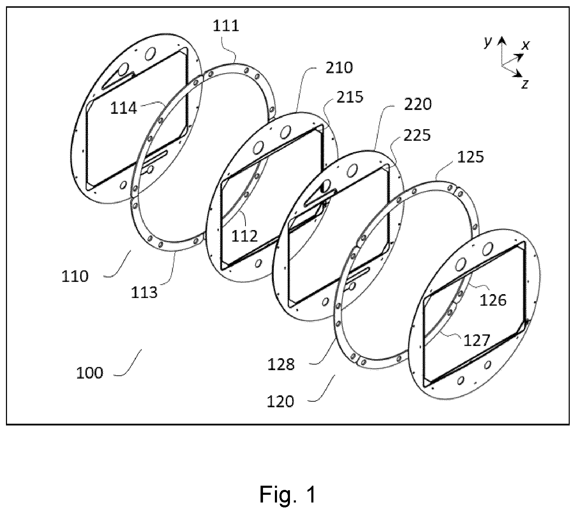

Fig. 1 provides a schematic, exploded view of the framing structure (100) according to the invention. It comprises: a first containment structure (110) and a second containment structure (120), a first support structure (210) and a second support structure (220). Their geometry is designed to ensure substantially uniform adherence between the containment structure and the enclosed support structure once the former is wrapped around the outer border of the latter, covering its width along the z direction in toto or in part. The first containment structure is composed of 4 identical and separate segments (111, 112, 113, 114). In general, the containment structures may be not identical in their segmentation, and also the segments of an individual containment structure may differ between each other. In this specific case, as can be seen in the figure, also the second containment structures is composed of 4 identical and separate segments (125, 126, 127, 128) like the first one. All segments are provided with 4 holes as engageable elements.
The support structures (210, 220) are provided with a housing (215, 225) for electrodes and other optional elements needed to operate the cell. It is noted that having identically shaped containment structures as well as identical segmentation may simplify the assembly of the pieces as well as the management of spare parts.

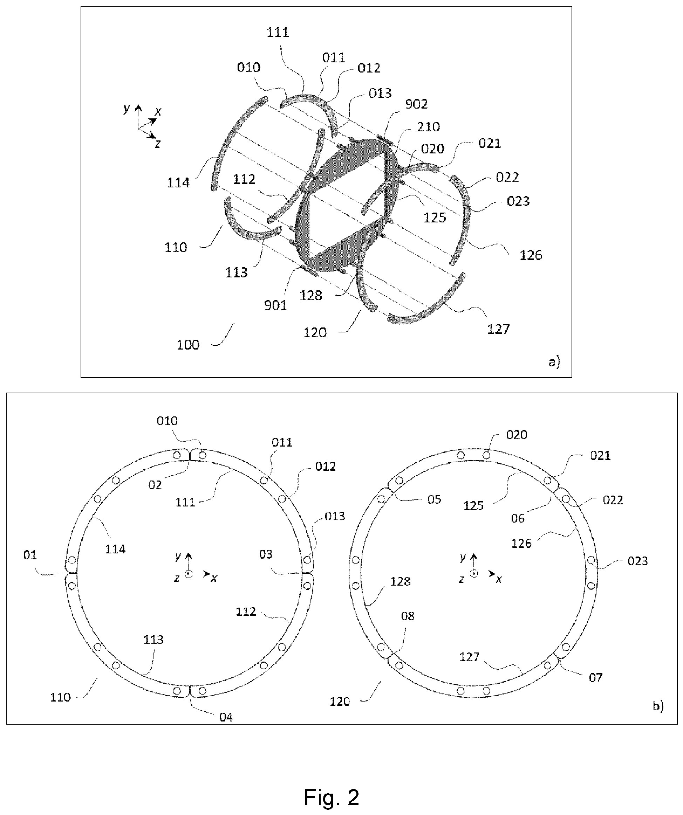

Fig. 2 illustrates the mutual positioning of the segments and corresponding engageable elements in the first and the second containment structures depicted in Fig. 1.
Fig. 2 (a) shows only one support structure (210) for clarity. Focusing on segment (111) of the first containment structure (110), it is possible to observe 4 engageable elements (010, 011, 012, 013), which are all placed on the same segment (111). The second containment structure (120) is oriented with respect to the first (110) so that the above mentioned engageable elements (010, 011, 012, 013) can engage with corresponding engageable elements (020, 021, 022, 023) that belong to two separate segments (125, 126) of the second containment structure (120). The engageable elements, in this instance through holes, can be engaged via suitable engageable means, such as tie rods (901, 902).
Fig. 2 (b) Illustrates how the first and second containment structures (110, 120) are placed with respect to a same set of coordinates, in the xy plane. The second containment structure (120) is identical to the first containment structure but is rotated at an angle (in this specific instance of 45°) so that the points of discontinuity (01, 02, 03, 04, 05, 06, 07, 08) in the first and second containment structures, i.e. the places where the containment structure is segmented, are offset with respect to each other. This allows to have at least two engageable elements (011, 012) of one same segment (111) of the first containment structure (110) facing two engageable elements (021, 022) present in two separate segments (125, 126) of the second containment structure. When engageable means such as tie rods connect the respective engageable elements of the two containment structures, the resulting device is mechanically stable. A similar effect would be achieved if the containment structures were in the shape of continuous rings, but the amount of scrap and packaging dimensions would result in much higher production and transport costs. In this figure, the segments within each containment structure are placed substantially adjacent and consecutive to each other, which leads to an optimized effect against the radial pressure, i.e. the pressure in the xy plane exerted during cell operation.

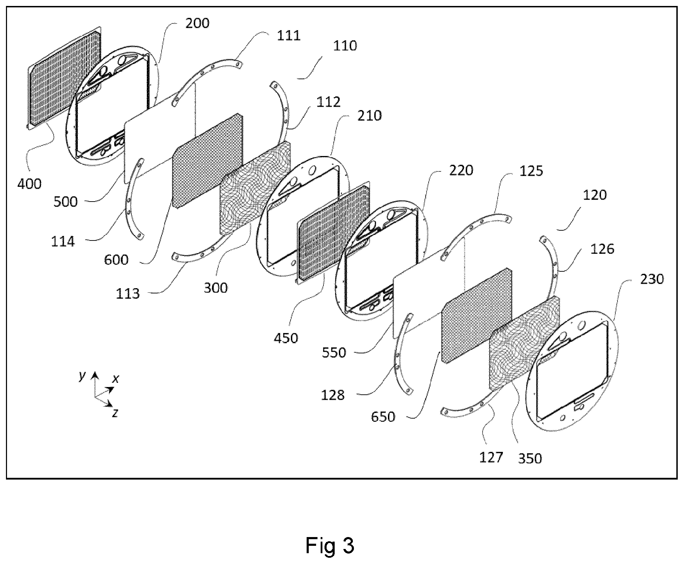

Fig. 3 provides a schematic, exploded view of certain elements of an electrolyser according to the invention. Two containment structures (110, 120) are shown. The first containment structure (110) is suitable to be wrapped around both support structures (200) and (210). Support structure (200) is suitable to house the bipolar element (400) (having a current collector and an anode welded on its surface). Support structure (210) is suitable to house the cathode (600) and an elastic element (300). The separator (500) is sandwiched between the anode surface welded on the bipolar element (400) and the cathode (600). Analogously, the second containment structure (120) is suitable to be wrapped around both support structures (220) and (230). Support structure (220) is suitable to house the bipolar element (450) (having a current collector and an anode welded on its surface). Support structure (230) is suitable to house the cathode (650) and an elastic element (350). The separator (550) is sandwiched between the anode surface welded on the bipolar element (450) and the cathode (650) On assembly, segments (125, 126, 127, 128) of the second containment structure (120) shall be rotated of 45° in the xy plane with respect to the corresponding segments (111, 112, 113, 114) of the first containment structure (110).

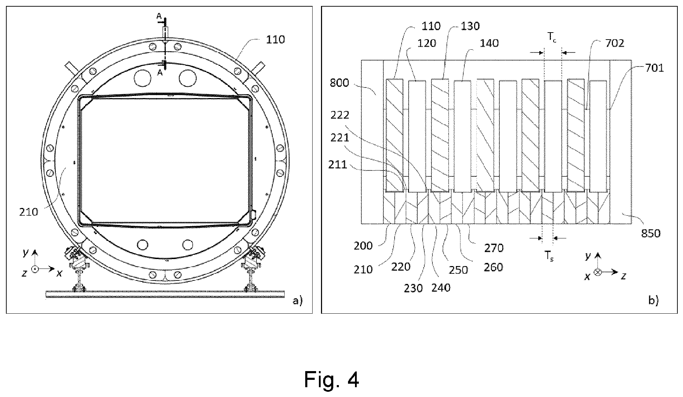

Fig. 4 shows two sections of an electrolyser according to the invention, which comprises a stack of multiple electrolytic cells. Panel a) shows a section in the xy plane. Panel b) shows a partial section of the same electrolyser in the yz plane. This partial section is a slice along the AA segment indicated in panel a). Panel b) shows how a plurality of containment structures (110, 120, 130, 140) is positioned in respect to a plurality of support structures (200, 210, 220, 230, 240, 250, 260, 270).
In this embodiment, each containment structure covers two support structures at a time (such as (120) covering (220, 230)). The support structures have ridges (221, 222, 223) that create a receded space to accommodate the containment structure. In this embodiment the containment structures have an individual thickness T_{c} roughly equal to 1.6·Tₛ, and each one covers around 80% of the support structure individual thickness Tₛ. The containment structures are mutually separated by spacers (701, 702, 703). While the containment structures address the pressure forces exerted in the xy plane, the terminal flanges (800, 850) counteract the pressure in the z direction. It is preferable to assemble the framing structures of the electrolyser in such way as to avoid having the containment structures, which may be advantageously made of steel, in direct contact with the metallic terminal flanges.

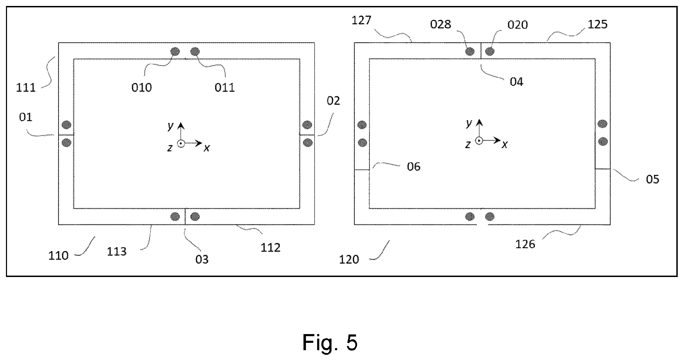

Fig. 5 is the same view of Fig. 2 (b) for a rectangular rather than circular geometry and shows a first and second containment structure (110, 120) placed with respect to a same set of coordinates, in the xy plane. The second containment structure (120) is identical to the first containment structure but is rotated at an angle in the xy plane (in this specific instance 180°) so that the points of discontinuity (01, 02, 03, 04, 05, 06) in the first and second containment structures are offset with respect to each other. This allows to have at least two engageable elements (010, 011) of one same segment (111) of the first containment structure (110) facing two engageable elements (020, 028) present in two separate segments (127, 125) of the second containment structure. The same concept applies for each segment of each containment structure.

In the description and the claims in this application the words "comprise" and its variations such as "comprising" and "comprises" do not rule out the presence of other additional elements, components, or stages.

The discussion of documents, deeds, materials, apparatus, articles and the like is included in the text solely for the purpose of providing context for this invention; it should not however be understood that this material or part thereof constitutes general knowledge in the field relating to the invention prior to the priority date of each of the claims appended to this application.

## Claims

1. A framing structure (100) for an electrolyser comprising:
- at least a first and a second containment structure (110, 120), and
- at least a first and a second support structure (210, 220) facing each other,
wherein
each support structure has two major opposite surfaces and an outer border of overall thickness Ts connecting the outer perimeters of said two major opposite surfaces,
said first and said second containment structures being respectively positioned around the outer border of said first and second support structures, said containment structures being each composed by at least two separate segments (111, 112, 113, 114, 125, 126, 127, 128), each segment being provided with at least two engageable elements (010, 011, 012, 013, 020, 021, 022, 023);
the segments of the second containment structures being oriented with respect to the segments of the first containment structure in such a way that at least two engageable elements (011, 012) of one same segment (111) of the first containment structure (110) face two engageable elements (021, 022) present in two separate segments (125, 126) of the second containment structure, and
said first and said second support structures (210, 220) are provided with a housing (215, 225) suitable to accommodate an electrode for electrolysis and/or a separator, said housing being situated on at least one of said two major opposite surfaces of each support structure.

2. The framing structure according to claim 1, wherein at least one containment structure is positioned around the outer border at least one support structure and covers at least 50% of its thickness Tₛ.

3. The framing structure according to any one of the preceding claims wherein at least one containment structure is positioned around the outer border at least one support structure and covers less than 100% of its thickness Tₛ.

4. The framing structure according to any one of the preceding claims wherein the number of support structures is greater than two and at least one containment structure (120) is situated around the outer border of at least two adjacent support structures (220, 230).

5. The framing structure according to any one of the preceding claims wherein at least two support structures are adjacent to each other and optionally separated by gaskets.

6. The framing structure according to any one of the preceding claims wherein said first and second containment structures are mutually separated by spacers (701, 702, 703) optionally made of rubber.

7. The framing structure according to any one of the preceding claims wherein the outer border of each support structure (210,220) has a protruding ridge (211, 221) along at least one of its perimetral edge.

8. The framing structure according to any one of the preceding claims wherein the support structures are made of a plastic material.

9. The framing structure according to any one of the preceding claims wherein the containment structures are made of a material having a greater mechanical resistance of the internal support structures.

10. The framing structure according to any one of the preceding claims wherein the containment structures are made of metal, preferably steel, carbon steel or stainless steel.

11. The framing structure according to any one of the preceding claims, wherein said one or more support structures are made of high-grade engineering plastics, preferably polysulfone, polyphenylene sulfide or polyether ether ketone, and optionally reinforced with glass fibers.

12. The framing structure according to any one of the preceding claims where said structure is a stack of at least 4 containment structures (110, 120, 130, 140) and at least 8 support structures (210, 220, 230, 240, 250, 260, 270, 280).

13. The framing structure according to any one of the preceding claims wherein said at least first and second support structures are of substantially circular shape having a maximum external diameter D_{F}, said first and said second containment structures have an annular shape and are divided into a plurality of arc-shaped segments, each annular-shaped containment structure has an internal and external diameter Dᵢ and Dₑ, where Dᵢ< D_{F}< Dₑ or D_{F} < Dᵢ< Dₑ.

14. The framing structure according to any one of the preceding claims wherein the engageable elements are through holes.

15. An electrochemical cell comprising the framing structure according to any one of the preceding claims, where the at least first support structure houses an anode, the at least second support structure houses a cathode, said anode and said cathode being placed facing each other and being optionally separated by a separator element such as a diaphragm or a membrane.

16. An electrolyser comprising a plurality of electrochemical cells according to claim 15 wherein the containment structures are mutually connected via tie rods engaging with the at least two engageable elements of each segment.

17. The use of the electrolyser according to claim 16 for high pressure water electrolysis.

## Patentansprüche

1. Rahmenstruktur (100) für einen Elektrolyseur, welche aufweist:
- mindestens eine erste und eine zweite Einschlussstruktur (110, 120), und
- mindestens eine erste und eine zweite Haltestruktur (210, 220), die einander gegenüberliegen,
wobei
jede Haltestruktur zwei entgegengesetzte Hauptflächen und einen äußeren Rand mit einer Gesamtdicke Ts, der die äußeren Umfänge der besagten zwei entgegengesetzten Hauptflächen verbindet, hat,
die besagte erste und die besagte zweite Einschlussstruktur in zugeordneter Weise um den äußeren Rand der besagten ersten und der besagten zweiten Haltestruktur herum angeordnet sind, wobei die besagten Einschlussstrukturen jeweils aus mindestens zwei separaten Segmenten (111, 112, 113, 114, 125, 126, 127, 128) zusammengesetzt sind, wobei jedes Segment mit mindestens zwei in Eingriff bringbaren Elementen (010, 011, 012, 013, 020, 021, 022, 023) versehen ist;
die Segmente der zweiten Einschlussstrukturen in Bezug auf die Segmente der ersten Einschlussstruktur derart ausgerichtet sind, dass mindestens zwei in Eingriff bringbare Elemente (011, 012) eines gleichen Segments (111) der ersten Einschlussstruktur (110) zwei in Eingriff bringbaren Elementen (021, 022), die in zwei separaten Segmenten (125, 126) der zweiten Einschlussstruktur vorhanden sind, gegenüberliegen, und
die besagte erste und die besagte zweite Haltestruktur (210, 220) mit einem Gehäuse (215, 225) versehen sind, das geeignet ist, eine Elektrode für die Elektrolyse und/oder einen Separator aufzunehmen, wobei das besagte Gehäuse an mindestens einer von den besagten zwei entgegengesetzten Hauptflächen jeder Haltestruktur angeordnet ist.

2. Rahmenstruktur gemäß Anspruch 1, wobei mindestens eine Einschlussstruktur um den äußeren Rand mindestens einer Haltestruktur herum angeordnet ist und mindestens 50 % ihrer Dicke Tₛ bedeckt.

3. Rahmenstruktur gemäß irgendeinem der vorhergehenden Ansprüche, wobei mindestens eine Einschlussstruktur um den äußeren Rand mindestens einer Haltestruktur herum angeordnet ist und weniger als 100 % ihrer Dicke Tₛ bedeckt.

4. Rahmenstruktur gemäß irgendeinem der vorhergehenden Ansprüche, wobei die Anzahl an Haltestrukturen größer als zwei ist und mindestens eine Einschlussstruktur (120) um den äußeren Rand von mindestens zwei benachbarten Haltestrukturen (220, 230) herum angeordnet ist.

5. Rahmenstruktur gemäß irgendeinem der vorhergehenden Ansprüche, wobei mindestens zwei Haltestrukturen benachbart zueinander sind und optional mittels Dichtungen getrennt sind.

6. Rahmenstruktur gemäß irgendeinem der vorhergehenden Ansprüche, wobei die besagte erste und die besagte zweite Einschlussstruktur mittels Abstandselementen (701, 702, 703), die optional aus Gummi hergestellt sind, voneinander getrennt sind.

7. Rahmenstruktur gemäß irgendeinem der vorhergehenden Ansprüche, wobei der äußere Rand jeder Haltestruktur (210, 220) eine vorstehende Erhöhung (211, 221) entlang mindestens eines ihrer Umfangsränder hat.

8. Rahmenstruktur gemäß irgendeinem der vorhergehenden Ansprüche, wobei die Haltestrukturen aus einem Kunststoffmaterial hergestellt sind.

9. Rahmenstruktur gemäß irgendeinem der vorhergehenden Ansprüche, wobei die Einschlussstrukturen aus einem Material hergestellt sind, das eine größere mechanische Beständigkeit als die inneren Haltestrukturen hat.

10. Rahmenstruktur gemäß irgendeinem der vorhergehenden Ansprüche, wobei die Einschlussstrukturen aus Metall, vorzugsweise Stahl, Kohlenstoffstahl oder rostfreiem Stahl, hergestellt sind.

11. Rahmenstruktur gemäß irgendeinem der vorhergehenden Ansprüche, wobei die besagte eine oder die besagten mehreren Haltestrukturen aus hochwertigen technischen Kunststoffen, vorzugsweise Polysulfon, Polyphenylensulfid oder Polyetheretherketon, hergestellt sind und optional mit Glasfasern verstärkt sind.

12. Rahmenstruktur gemäß irgendeinem der vorhergehenden Ansprüche, wobei die besagte Struktur ein Stapel aus mindestens 4 Einschlussstrukturen (110, 120, 130, 140) und mindestens 8 Haltestrukturen (210, 220, 230, 240, 250, 260, 270, 280) ist.

13. Rahmenstruktur gemäß irgendeinem der vorhergehenden Ansprüche, wobei die besagte mindestens eine erste und zweite Haltestruktur eine im Wesentlichen kreisförmige Form, welche einen maximalen Außendurchmesser D_{F} hat, haben, wobei die besagte erste und die besagte zweite Einschlussstruktur eine ringförmige Form haben und in eine Mehrzahl von bogenförmigen Segmenten unterteilt sind, wobei jede ringförmige Einschlussstruktur einen Innen- und einen Außendurchmesser Dᵢ und Dₑ hat, wobei Dᵢ < D_{F} < Dₑ oder D_{F} < Dᵢ < Dₑ.

14. Rahmenstruktur gemäß irgendeinem der vorhergehenden Ansprüche, wobei die in Eingriff bringbaren Elemente Durchgangslöcher sind.

15. Elektrochemische Zelle, welche die Rahmenstruktur gemäß irgendeinem der vorhergehenden Ansprüche aufweist, wobei die mindestens eine erste Haltestruktur eine Anode unterbringt, die mindestens eine zweite Haltestruktur eine Kathode unterbringt, wobei die besagte Anode und die besagte Kathode einander gegenüberliegend angeordnet sind und optional mittels eines Separatorelements, wie beispielsweise eines Diaphragmas oder einer Membran, getrennt sind.

16. Elektrolyseur, welcher eine Mehrzahl von elektrochemischen Zellen gemäß Anspruch 15 aufweist, wobei die Einschlussstrukturen mittels Zugstangen, die mit den mindestens zwei in Eingriff bringbaren Elementen jedes Segments in Eingriff stehen, miteinander verbunden sind.

17. Verwendung des Elektrolyseurs gemäß Anspruch 16 für eine Hochdruck-Wasserelektrolyse.

## Revendications

1. Structure de cadre (100) pour un électrolyseur, comprenant :
- au moins une première et une deuxième structures de confinement (110, 120), et
- au moins une première et une deuxième structures de support (210, 220) se faisant face,
dans laquelle
chaque structure de support présente deux surfaces principales opposées et un bord extérieur d'épaisseur totale Ts reliant les périmètres extérieurs desdites deux surfaces principales opposées,
lesdites première et deuxième structures de confinement sont respectivement positionnées autour du bord extérieur desdites première et deuxième structures de support, lesdites structures de confinement étant chacune composées d'au moins deux segments séparés (111, 112, 113, 114, 125, 126, 127, 128), chaque segment étant muni d'au moins deux éléments pouvant être mis en prise (010, 011, 012, 013, 020, 021, 022, 023) ;
les segments des deuxièmes structures de confinement étant orientés par rapport aux segments de la première structure de confinement de telle sorte qu'au moins deux éléments pouvant être mis en prise (011, 012) d'un même segment (111) de la première structure de confinement (110) soient en regard de deux éléments pouvant être mis en prise (021, 022) présents dans deux segments séparés (125, 126) de la deuxième structure de confinement, et
lesdites première et deuxième structures de support (210, 220) sont pourvues d'un logement (215, 225) adapté pour recevoir une électrode d'électrolyse et/ou un séparateur, ledit logement étant situé sur au moins l'une desdites deux surfaces principales opposées de chaque structure de support.

2. Structure de cadre selon la revendication 1, dans laquelle au moins une structure de confinement est positionnée autour du bord extérieur d'au moins une structure de support et recouvre au moins 50 % de son épaisseur Tₛ.

3. Structure de cadre selon l'une quelconque des revendications précédentes, dans laquelle au moins une structure de confinement est positionnée autour du bord extérieur d'au moins une structure de support et recouvre moins de 100 % de son épaisseur Tₛ.

4. Structure de cadre selon l'une quelconque des revendications précédentes, dans laquelle le nombre de structures de support est supérieur à deux et au moins une structure de confinement (120) est située autour du bord extérieur d'au moins deux structures de support adjacentes (220, 230).

5. Structure de cadre selon l'une quelconque des revendications précédentes, dans laquelle au moins deux structures de support sont adjacentes l'une à l'autre et éventuellement séparées par des joints d'étanchéité.

6. Structure de cadre selon l'une quelconque des revendications précédentes, dans laquelle lesdites première et deuxième structures de confinement sont mutuellement séparées par des entretoises (701, 702, 703) éventuellement réalisées en caoutchouc.

7. Structure de cadre selon l'une quelconque des revendications précédentes, dans laquelle le bord extérieur de chaque structure de support (210, 220) comporte une arête saillante (211, 221) le long d'au moins l'un de ses bords périphériques.

8. Structure de cadre selon l'une quelconque des revendications précédentes, dans laquelle les structures de support sont réalisées en matière plastique.

9. Structure de cadre selon l'une quelconque des revendications précédentes, dans laquelle les structures de confinement sont réalisées dans un matériau présentant une résistance mécanique supérieure à celle des structures de support internes.

10. Structure de cadre selon l'une quelconque des revendications précédentes, dans laquelle les structures de confinement sont réalisées en métal, de préférence en acier, en acier au carbone ou en acier inoxydable.

11. Structure de cadre selon l'une quelconque des revendications précédentes, dans laquelle ladite une ou lesdites plusieurs structures de support sont réalisées en plastiques techniques de haute qualité, de préférence en polysulfone, en polyphénylène sulfure ou en polyéther éther cétone, et éventuellement renforcées par des fibres de verre.

12. Structure de cadre selon l'une quelconque des revendications précédentes, dans laquelle ladite structure est un empilement d'au moins 4 structures de confinement (110, 120, 130, 140) et d'au moins 8 structures de support (210, 220, 230, 240, 250, 260, 270, 280).

13. Structure de cadre selon l'une quelconque des revendications précédentes, dans laquelle lesdites au moins une première et deuxième structures de support sont de forme sensiblement circulaire présentant un diamètre extérieur maximal D_{F}, lesdites première et deuxième structures de confinement ont une forme annulaire et sont divisées en une pluralité de segments en forme d'arc, chaque structure de confinement de forme annulaire présente un diamètre intérieur Dᵢ et un diamètre extérieur Dₑ, où Dᵢ < D_{F} < Dₑ ou D_{F} < Dᵢ < Dₑ.

14. Structure de cadre selon l'une quelconque des revendications précédentes, dans laquelle les éléments pouvant être mis en prise sont des trous traversants.

15. Cellule électrochimique comprenant la structure de cadre selon l'une quelconque des revendications précédentes, dans laquelle ladite au moins une première structure de support loge une anode, ladite au moins une deuxième structure de support loge une cathode, ladite anode et ladite cathode étant placées de manière à se faire face et étant éventuellement séparées par un élément séparateur tel qu'un diaphragme ou une membrane.

16. Électrolyseur comprenant une pluralité de cellules électrochimiques selon la revendication 15, dans lequel les structures de confinement sont reliées entre elles par des tirants venant en prise avec les au moins deux éléments pouvant être mis en prise de chaque segment.

17. Utilisation de l'électrolyseur selon la revendication 16 pour l'électrolyse d'eau à haute pression.
